# EUROPÄISCHE PATENTSCHRIFT

(11) **EP 1 749 944 B1**
(45) Veröffentlichungstag und Bekanntmachung des Hinweises auf die Patenterteilung: **28.10.2009**
(21) Anmeldenummer: 06090130.3
(22) Anmeldetag: 28.07.2006
(51) Int. Cl.: E03F 7/12, G01C 7/06, F16L 55/26, G03B 37/00

(54) **Vorrichtung und Verfahren zur Inspektion von Wasser führenden Kanälen**
Water-conducting channels inspection method and device
Dispositif et procédé destinés à l'inspection de conduites d'eau

(30) Priorität: 01.08.2005 DE 102005036502
(43) Veröffentlichungstag der Anmeldung: 07.02.2007
(73) Patentinhaber: Emschergenossenschaft, 45128 Essen (DE)
(72) Erfinder: Kutzner, Sven, 39112 Magdeburg (DE); Elkmann, Norbert, 39104 Magdeburg (DE); Stuerze, Thomas, 39116 Magdeburg (DE)
(74) Vertreter: Kaewert, Klaus

(56) Entgegenhaltungen:
- DE-U1- 20 308 761
- US-A- 4 363 545

## Beschreibung

Die Erfindung betrifft eine Vorrichtung und ein Verfahren zur Inspektion von Wasser führenden Kanälen, insbesondere von Abwasserkanälen mit gekrümmten Flächen.

Zur Sicherstellung der einwandfreien Funktion von Abwässerkanälen ist es wichtig, in regelmäßigen Abständen den Zustand der Rohre zu erfassen. Dazu sind bisher Begehungen in trockenem Kanal notwendig. Die Schäden werden dabei manuell erfasst und entsprechend klassifiziert. Diese manuelle Begehung der Kanäle behindert den laufenden Betrieb, da für den Zeitraum der Begehung umfangreiche Maßnahme, wie Entleerung, Belüftung, Bereitstellung von Sicherheitspersonal und dergleichen, zu treffen sind. Weiterhin hängt die Erfassung und Vermessung der Schäden von der Erfahrung und Ausbildung des Kanalbegehers ab. Eine wiederholende exakte Vermessung der Schäden, speziell von Rissen, ist somit schwierig durchführbar.

Aus der DE 203 08 761 U1 ist ein Kanalfahrwagen zur Untersuchung von Kanalrohren, insbesondere zur Feststellung von Deformationen im Wandbereich des Kanalrohrs bekannt, bei dem auf einem Fahrwagen eine Kamera befestigt ist, mit der Videobilder aufgenommen werden, die später ausgewertet werden. Am Fahrwagen ist im Blickwinkel der Kamera ein in Fahrtrichtung nach vorn gerichtetes Markierungsgestellt mit senkrecht zur Kanalwandung angeordneten Markierungsköpfen angeordnet. Auch bei Verwendung eines solchen Fahrwagens müsste in Abwasserkanälen das Wasser entleert werden. Ein ähnliches Gerät zum Befahren und zur videoskopischen Inspektion von Hohlräumen ist aus der DE 100 62 531 A1 bekannt, bei dem ein Videomodul an einem Fahrwerk- und Antriebsmodul befestigt ist. Auch dieses Gerät ist nicht für die Inspektion von Wasser führenden Kanälen geeignet.

Der Erfindung liegt die Aufgabe zugrunde, eine Vorrichtung bzw. ein Verfahren zur Inspektion von Wasser führenden Kanälen zu schaffen, die im laufenden Betrieb in den Abwasserkanal eingesetzt bzw. durchgeführt werden können, wobei ein Entleerung und Begehung der Kanäle nicht mehr notwendig ist.

Diese Aufgabe wird erfindungsgemäß durch die Merkmale des Anspruchs 1 als Vorrichtung und des Anspruchs 14 als Verfahren gelöst.

Dadurch, dass die erfindungsgemäße Vorrichtung ein einen Hohlraum umschließendes druckdichtes Gehäuse mit einer Zugangsöffnung, eine den Rand der Zugangsöffnung umgreifende Dichtung zum Abdichten des Hohlraums an der zu inspizierenden Wand des Kanals, eine in dem Gehäuse endenden Druckluftzuführung zum Ausblasen von Wasser beim Positionieren des druckdichten Gehäuses an der Wand und eine Absaugvorrichtung zum Absaugen von Restwasser aus dem Hohlraum nach dem Positionieren des Gehäuses sowie eine in dem Gehäuse angeordnete Kameraeinheit zum Aufnehmen von Bildern der Wand des Kanals umfasst, ist es möglich, entsprechend der Funktionsweise einer Tauchglocke die zu inspizierende Fläche wasserfrei zu machen und auswertbare Bilder der zu inspizierenden Wand aufzunehmen. Durch Zuführen der Druckluft wird vorteilhafterweise das Wasser bis zur Zugangsöffnung des Gehäuses verdrängt.

Mit der Erfindung ist eine automatische Inspektion der Kanalwand und eine exakte Vermessung von Rissen während des laufenden Betriebs von Abwässerkanälen möglich. Die Evakuierung der Hohlkammer erfolgt durch Verdrängen des Abwassers mit Druckluft beim Positionieren, durch Abdichten der Hohlkammer gegenüber der Kanaloberfläche und Absaugen des Restwassers.

Durch die in den abhängigen Ansprüchen angegebenen Maßnahmen sind vorteilhafte Weiterbildungen und Verbesserungen möglich.

Besonders vorteilhaft ist, dass der Rand der Zugangsöffnung zur Anpassung an eine gekrümmte Kanalwand gekrümmt ist, wodurch die dort vorhandene Dichtung an allen Stellen gleichmäßig komprimiert wird.

Durch Vorsehen einer ersten Reinigungsvorrichtung in dem Gehäuse, die beispielsweise als Düsen zum Zuführen von unter Druck stehendem Wasser aufweist, ist es möglich, die Kanalwand durch die Zugangsöffnung hindurch zu reinigen. Bei Verwendung einer zweiten Reinigungsvorrichtung mit Wasser- und Luftdüsen ist es möglich, eine einen Kasten der Kameraeinheit abschließende Glasscheibe zu reinigen und zu trocknen.

Besonders vorteilhaft ist, dass die Absaugvorrichtung Absaugrohre aufweist, die im Bereich der Zugangsöffnung angeordnet und federnd in Führungen gelagert sind, da damit die Elastizität der Dichtung ausgeglichen wird und die Absaugrohre sich an die Änderung anpassen können.

Es kann vorteilhaft sein, den inneren Bereich der Hohlkammer mit klarem Frischwasser zu füllen. So ist eine Inspektion auch bei hoher Fugen zwischen zwei Rohrsegmenten, bei denen keine absolute Dichtheit des Gehäuses bzw. der Hohlkammer erreicht werden kann, möglich. Das eventuell noch vorhandene Abwasser wird durch das Frischwasser sehr stark verdünnt und ermöglicht eine optische Erfassung. Zusätzlich ist es möglich, eindringendes Grundwasser im Bereich der Hohlkammer zu erkennen, da eine lokale Trübung auftritt. Auch können mit dem Einfüllen von klarem Frischwasser und Aufnehmen der Kanalwand durch das Frischwasser hindurch Reflexionen verhindert werden, die ansonsten nach einer Evakuierung der Hohlkammer auftreten könnten.

Ein Ausführungsbeispiel der Erfindung ist in der Zeichnung dargestellt und wird in der nachfolgenden Beschreibung näher erläutert. Es zeigen:
- Fig. 1: eine perspektivische Ansicht des Gehäuses der erfindungsgemäßen Vorrichtung von unten,
- Fig. 2: eine schematische Ansicht der erfindungsgemäßen Vorrichtung im Schnitt,
- Fig. 3: eine perspektivische Teilansicht eines Absaugrohres, und
- Fig. 4: eine schematische Darstellung der erfindungsgemäßen Vorrichtung in Position an der Kanalwand,
- Fig. 5 und Fig. 6: schematische Ansichten einer in einem Kanal vorgesehenen Bewegungseinrichtung.

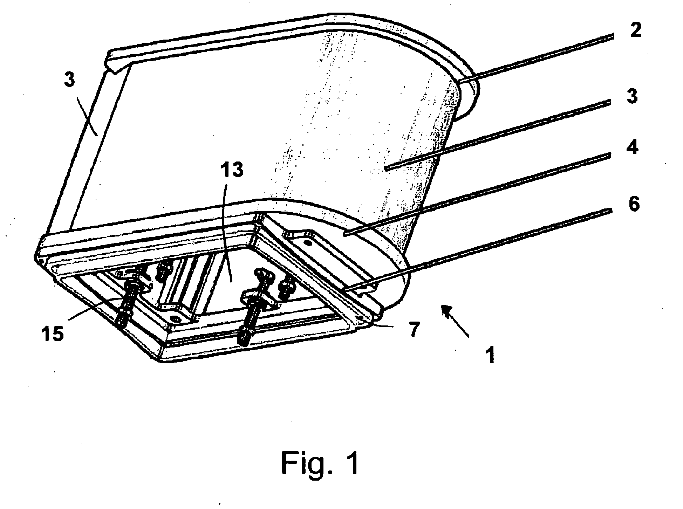

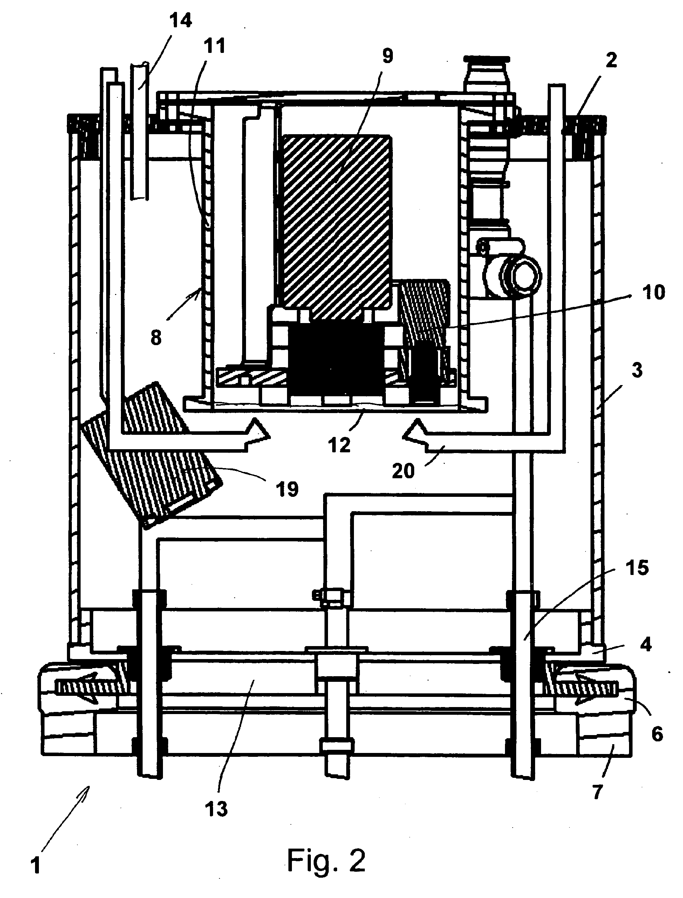

Die erfindungsgemäße Vorrichtung entsprechend Fig. 1 und Fig. 2 weist nach Art einer "Tauchglocke" ein Gehäuse 1 auf, das unterschiedliche Formen haben kann und beispielsweise als Zylinder oder als Quader oder dergleichen ausgebildet ist. Im dargestellten Beispiel nach Fig. 1 weist das Gehäuse 1 eine Deckelplatte 2, Seitenwände 3 und eine Bodenplatte 4 auf, wobei die Seitenwände 3 von der Deckel- und der Bodenplatte 2, 4 eingespannt sind. Die Bodenplatte 4 ist mit einer Öffnung 13 versehen, und ein rahmenförmiger Dichtungshalter 6 ist mit der Bodenplatte 4 verbunden und umgreift die Zugangsöffnung 13. In dem Dichtungshalter 6 ist eine umlaufende Dichtung 7 eingebettet.

Wie in Fig. 2 zu erkennen ist, ist eine Kameraeinheit 8 in den Hohlraum des Gehäuses 1 eingesetzt. Sie weist eine digitale Kamera 9 und eine Beleuchtungsanordnung 10 auf, die in einem wasserdichten Kasten 11 aufgenommen sind, der wiederum an der Deckelplatte 2 befestigt ist. Der Kasten 11 ist an der Aufnahmeseite der Kamera 9 mit einer Glasscheibe 12 abgeschlossen, die die Sichtöffnung für die Kamera und die Beleuchtung bildet. Die Glasscheibe 12 ist vorzugsweise nanobeschichtet, d.h. Wasser und Schmutz abweisend beschichtet. Die Glasscheibe 12 ist gegenüberliegend zu der Zugangsöffnung 13 des Gehäuses 1 angeordnet.

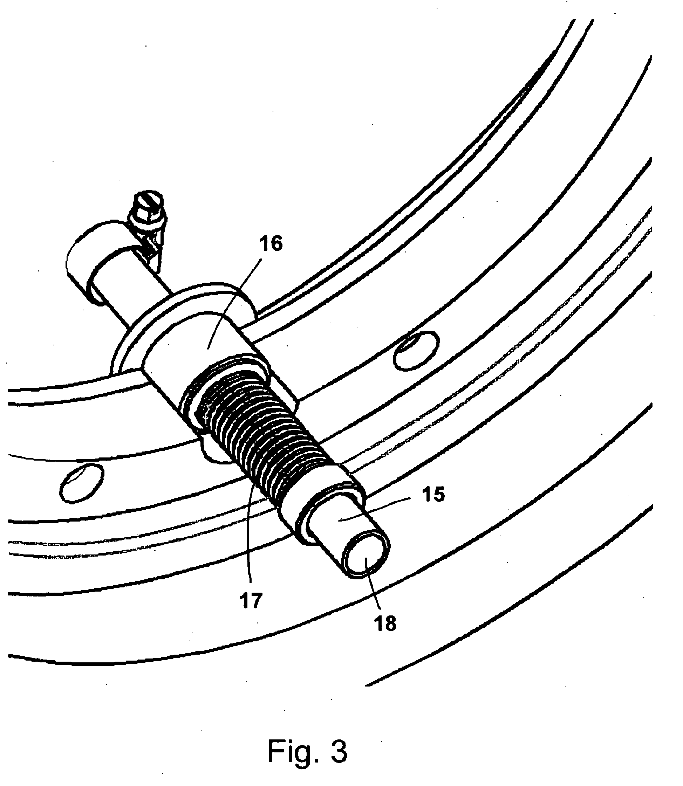

In der Deckelplatte sind Luftdüsen 14 angeordnet, die zur Zufuhr von unter Druck stehender Luft oder Gas dienen. Außerdem sind im Bereich der Zugangsöffnung 13 Absaugrohre 15 dargestellt, die in der Bodenplatte 4 befestigt sind und die mit nicht dargestellten Leitungen zur Wegführung des abgesaugten Wassers verbunden sind. Wie in Fig. 3 dargestellt ist, sind die Absaugrohre 15 in einer Gleitführung 16 über eine Feder 17 gelagert, wodurch die Elastizität der Dichtung 7 ausgeglichen werden kann. Für eine definierte Öffnung des unteren Endes 18 des Absaugrohres ist dieses angeschrägt.

Eine erste und eine zweite (19, 20) Reinigungsvorrichtung sind im Inneren des Gehäuses 1 angeordnet. Die erste Reinigungsvorrichtung weist Düsen zur Zuführung von unter Druck stehendem Wasser auf und hat die Aufgabe, die Reinigung der der Zugangsöffnung 13 gegenüberliegenden Stelle an der Kanalwand durchzuführen. Die zweite Reinigungsvorrichtung dient zur Reinigung der Glasscheibe 12. Für die Reinigung durch die Zugangsöffnung 13 werden die Wasserdüsen mit unter Druck stehendem Wasser versorgt, während vorzugsweise für die Reinigung der Glasscheibe Frischwasser und Luft über entsprechende Düsen zugeführt werden, wobei die Luft zum Abblasen von Wassertropfen dient. Dabei unterstützt die Nanobeschichtung der Glasscheibe 12 die Bildung von Wassertropfen, die leicht weggeblasen werden können.

In Fig. 1 und Fig. 2 sind der untere Rand des Gehäuses 1 bzw. der Dichtungshalter 6 bzw. die Dichtung 7 gerade ausgeführt, eines oder mehrere dieser Elemente kann aber auch gekrümmt sein, derart, dass die Berandung der Zugangsöffnung an eine gekrümmte Wand anpassbar ist. Beispielsweise kann der Dichtungshalter 6 die Krümmung entsprechend der Kanalwand aufweisen. Bei einem nicht gekrümmten Rand der Zugangsöffnung 13 wird die Dichtung 7 ungleichmäßig komprimiert, durch den gekrümmten Rand wird eine gleichmäßige Komprimierung erhalten.

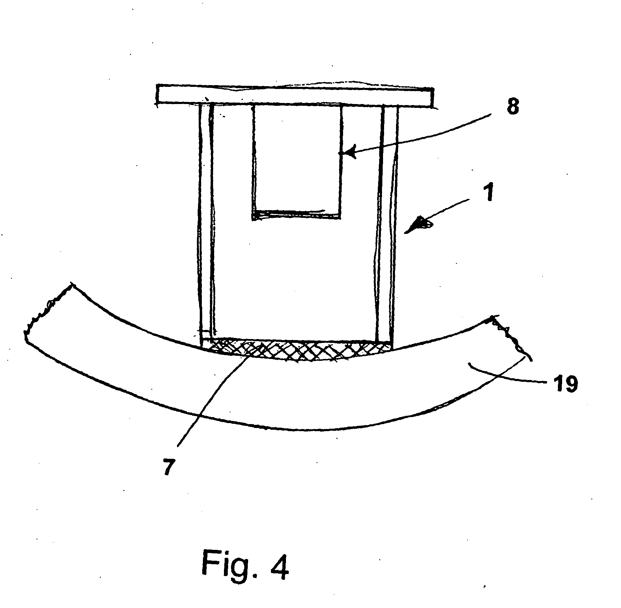

In Fig. 4 ist eine Zustellung des Gehäuses 1 mit Dichtung 7 an einer Kanalwand 19 dargestellt, wobei hier die unterschiedliche Kompression der Dichtung 7 von der Mitte des Gehäuses zum Rand hin zu erkennen ist. Selbstverständlich können die beschriebenen Bestandteile, z.B. Bodenplatte und Dichtungsrahmen, auch zusammengefasst werden.

Die oben beschriebene Vorrichtung ist an einer schwimmenden oder radgeführten Bewegungsvorrichtung befestigt, die außerdem eine Positionierkinematik für die erfindungsgemäße Vorrichtung aufweist.

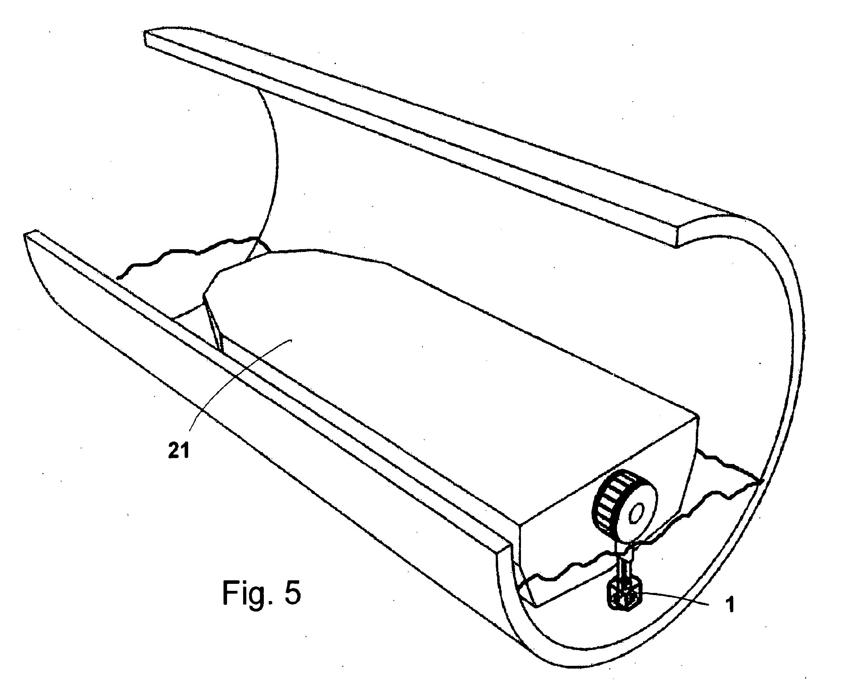

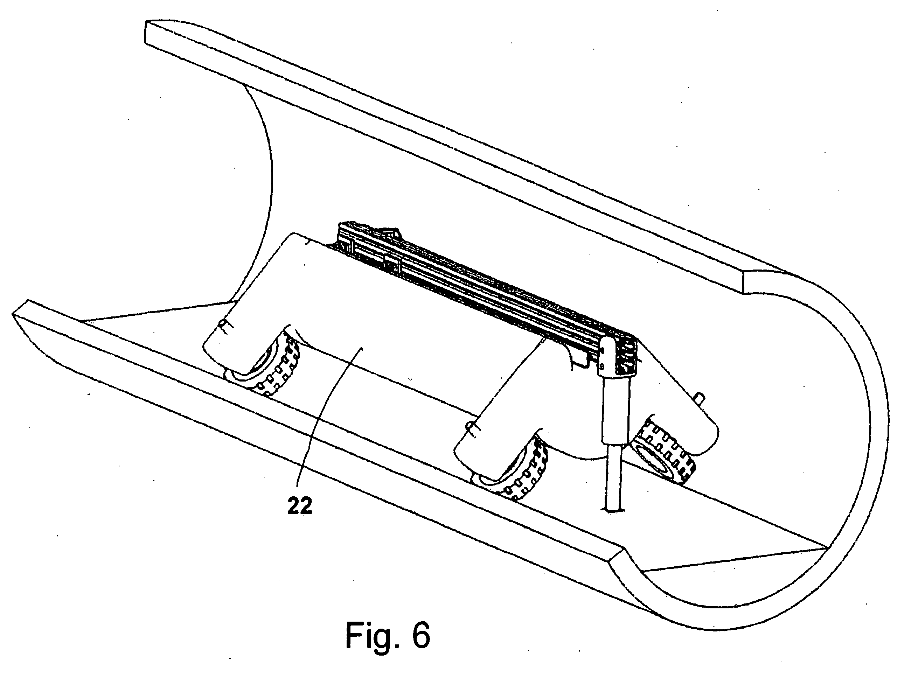

In Fig. 5 ist die erfindungsgemäße Vorrichtung an einem Boot 21 angebracht, während in Fig. 6 ein radgeführtes Fahrzeug 22 zu erkennen ist.

Für eine Inspektion wird die Bewegungseinrichtung im Kanal zu dem zu inspizierenden Bereich bewegt, mit der Positioniereinrichtung wird das Gehäuse mit der Zugangsöffnung 13 vorzugsweise senkrecht in das Wasser eingetaucht, wobei die Hohlkammer beim Eintauchen sich mit Wasser füllt. Um dies zu vermeiden und die Hohlkammer zu evakuieren wird über die Luftdüsen 14 Druckluft zugeführt, um somit das Wasser bis zur Zugangsöffnung 13 zu verdrängen. Gleichzeitig wird das Gehäuse weiter zur Kanalwand 19 gedrückt, wodurch die Hohlkammer durch Komprimieren der Dichtung 7 zur Wandoberfläche hin abgedichtet wird. Über die Absaugrohre 15 wird das Restwasser am tiefsten Punkt der Hohlkammer abgesaugt. Vorzugsweise wird dann die nicht dargestellte Reinigungseinheit für die Kanaloberfläche im Bereich der Zugangsöffnung durch über Wasserdüsen zugeführtes und unter Druck stehendes Wasser gereinigt, wobei gleichzeitig das Wasser weiterhin abgesaugt wird. Anschließend wird mit der Kamera 9 und der Beleuchtungsvorrichtung 10 das Bild der Kanalwand 19 aufgenommen. Für die Verarbeitung der Bildinformation kann an der Bewegungseinrichtung selbst eine Auswerteeinrichtung vorgesehen sein, die Bilder können auch an eine externe Auswerteeinrichtung übertragen werden. Die Auswertung mit Vermessung von Rissen kann parallel zur Erfassung oder auch später durchgeführt werden.

Diese Vorgehensweise kann sequentiell wiederholt werden, um eine große Fläche der Kanalwand zu erfassen.

Für eine visuelle Inspektion von Rohrfugen zwischen zwei Rohrsegmenten kann keine absolute Dichtheit der Hohlkammer erreicht werden, d.h., eine vollständige Evakuierung ist nicht mehr oder nur noch unzureichend möglich. Um hier trotzdem eine Inspektion durchführen zu können, wird die Hohlkammer nach dem Ausblasen mit Druckluft nicht weiter evakuiert. Stattdessen wird der innere Bereich der Hohlkammer mit klarem Frischwasser geflutet und die Zuführung des Frischwassers wird auch bei den Aufnahmen mit der Kamera aufrechterhalten. Das noch vorhandene restliche Abwasser in der Hohlkammer wird somit sehr stark verdünnt und es ist eine Betrachtung der Kanalwand möglich. Zusätzlich kann eindringendes Grundwasser in den Kanal durch die Rohrdichtung im Bereich der Hohlkammer erkannt werden. Das Grundwasser, das einen Verschmutzungsgrad aufweist, vermischt sich mit dem Frischwasser innerhalb der Hohlkammer und eine lokale Trübung ist somit erfassbar.

Nach einer erfolgreichen Evakuierung kann es zu Reflexionen auf der Kanalwand kommen. Eine ganzheitliche optische Erfassung ist somit nicht immer gegeben. Um dennoch eine sehr genaue Aufnahme der Kanaloberfläche zu erreichen, kann nach der Evakuierung der Hohlkammer und Reinigung der Kanaloberfläche klares Frischwasser in das Innere der Hohlkammer, wie oben beschrieben, eingefüllt werden. Die Reflexionen können dadurch effektiv verhindert werden.

Bei einem Kanal mit ebenem Boden kann auf die Absaugvorrichtung verzichtet werden, allerdings ist die erfindungsgemäße Vorrichtung insbesondere für Kanäle mit gekrümmtem Boden, z.B. mit rundem oder ovalem oder sonstigem Querschnitt vorgesehen.

## Patentansprüche

1. Vorrichtung zur Inspektion von Wasser führenden Kanälen, insbesondere von Abwasserkanäle, die mittels einer Bewegungseinrichtung in dem Kanal bewegbar ist und eine Kameraeinheit zur Aufnahme von Bildern der Kanalwand aufweist,
**gekennzeichnet durch**
ein eine Hohlkammer umschließendes druckdichtes Gehäuse (1) mit einer Zugangsöffnung (13) nach einer Art Tauchglocke, einer den Rand der Zugangsöffnung (13) umgreifenden Dichtung (7) zum Abdichten der Hohlkammer an der zu inspizierenden Wand des Kanals, eine in dem Gehäuse endenden Druckluftzuführung zum Ausblasen von Wasser beim Positionieren des druckdichten Gehäuses (1) an der Kanalwand, eine Absaugvorrichtung (15)
zum Absaugen von Restwasser aus der Hohlkammer nach der Positionierung des Gehäuses, wobei die Kameraeinheit zum Aufnehmen von Bildern der Kanalwand wasserdicht in dem Gehäuse angeordnet ist.

2. Vorrichtung nach Anspruch 1, **dadurch gekennzeichnet, dass** der Rand der Zugangsöffnung (13) zur Anpassung an eine mit einer Krümmung versehenen Kanalwand gekrümmt ist.

3. Vorrichtung nach Anspruch 1 oder Anspruch 2, **dadurch gekennzeichnet, dass** die Kameraeinheit (8) eine Kamera (9) und eine Beleuchtungsvorrichtung (10) umfasst, die in einem wasserdichten Kasten (11) aufgenommen sind.

4. Vorrichtung nach Anspruch 3, **dadurch gekennzeichnet, dass** der Kasten (11) der Kameraeinheit (8) in dem Gehäuse (1) angeordnet und an diesem befestigt ist.

5. Vorrichtung nach Anspruch 3 oder Anspruch 4, **dadurch gekennzeichnet, dass** der Kasten der Kameraeinheit (8) mit einer Glasscheibe (12) versehen ist, hinter der das Objektiv der Kamera angeordnet ist.

6. Vorrichtung nach einem der Ansprüche 1 bis 5, **dadurch gekennzeichnet, dass** in dem Gehäuse eine erste Reinigungsvorrichtung zum Reinigen der Kanalwand durch die Zugangsöffnung hindurch angeordnet ist.

7. Vorrichtung nach Anspruch 6, **dadurch gekennzeichnet, dass** die erste Reinigungsvorrichtung Düsen zum Zuführen von unter Druck stehendem Wasser für die Reinigung der Kanalwand aufweist.

8. Vorrichtung nach Anspruch 6 oder Anspruch 7, **dadurch gekennzeichnet, dass** eine zweite Reinigungsvorrichtung mit Luft- und/oder Wasserdüsen für die Reinigung und/oder Trocknung der Glasscheibe der Kameraeinheit (8) vorgesehen ist..

9. Vorrichtung nach einem der Ansprüche 5 bis 8, **dadurch gekennzeichnet, dass** die Glasscheibe (12) eine Wasser und Schmutz abweisende Beschichtung aufweist.

10. Vorrichtung nach einem der Ansprüche 1 bis 9, **dadurch gekennzeichnet, dass** die Absaugvorrichtung Absaugrohre (15) aufweist, die im Bereich der Zugangsöffnung (13) angeordnet und federnd in Führungen (16) gelagert sind.

11. Vorrichtung nach einem der Ansprüche 1 bis 10, **dadurch gekennzeichnet, dass** die Dichtung (7) in einem Dichtungsrahmen (6) angeordnet ist, der an dem Gehäuse (1) befestigt ist.

12. Vorrichtung nach Anspruch 11, **dadurch gekennzeichnet, dass** der Dichtungsrahmen (6) zur Anpassung an die Kanalwand gekrümmt ist.

13. Vorrichtung nach einem der Ansprüche 1 bis 12, **dadurch gekennzeichnet, dass** Zufuhrrohre für Frischwasser vorgesehen sind, die in die Hohlkammer des Gehäuses (1) für die Zufuhr von Frischwasser ragen.

14. Verfahren zur Inspektion von Wasser führenden rohrförmigen Kanälen, insbesondere Abwässerkanälen, **gekennzeichnet durch** folgende Schritte: Positionieren eines eine Hohlkammer umschließenden Gehäuses (1) mit einer Zugangsöffnung (13) an der zu inspizierenden Fläche, wobei die Zugangsöffnung der zu inspizierenden Fläche zugewandt wird,
Aufbringen eines Überdrucks in das Gehäuse (1) zur Verdrängung des eindringenden Wassers, Anpressen des Gehäuses mit der Zugangsöffnung (13) an die zu inspizierende Fläche zur Erzielung eines wasserdichten Abschlusses,
Absaugen von Restwasser aus dem Gehäuse und Aufnehmen von Bildern der zu inspizierenden Fläche.

15. Verfahren nach Anspruch 14, **dadurch gekennzeichnet, dass** die zu inspizierende Fläche mit unter Druck stehendem Wasser durch die Zugangsöffnung hindurch gereinigt wird.

16. Verfahren nach Anspruch 14 oder 15, **dadurch gekennzeichnet, dass** die Hohlkammer für die Aufnahme von Bildern der zu inspizierenden Fläche und bei Vorhandensein geringer Undichtigkeiten im angepressten Zustand des Gehäuses an die Fläche der Kanalwand mit Frischwasser gefüllt wird.

17. Verfahren nach Anspruch 14 oder 15 oder 16, **dadurch gekennzeichnet, dass** die Bilder während der Abtastung der Kanalwand ausgewertet oder gespeichert und später ausgewertet werden.

## Claims

1. Inspection device for water-conducting channels, in particular for drains, which is movable in the drain by means of a moving device and which has a camera unit for taking photographs of the channel wall,
**characterised by**
a pressure-tight housing (1) that encloses a hollow chamber and which is arranged with an access opening (13) like a sort of diving bell, a seal (7) encompassing the edge of the access opening for sealing the hollow chamber at the channel wall to be inspected, a compressed air feed terminating in the housing for blowing out water when the pressure-tight housing (1) is being positioned on the channel wall, a suction device (15) for aspirating residual water from the hollow chamber once the housing has been put into position, wherein the camera unit that is used for taking photographs of the channel wall is arranged in the housing in a water-tight manner.

2. Device according to claim 1 **characterised in that** the edge of the access opening (13) is curved in order to fit onto a channel wall provided with a curvature.

3. Device according to claim 1 or claim 2 **characterised in that** the camera unit (8) comprises a camera (9) and a light source (10), which are housed in a water-tight box (11).

4. Device according to claim 3 **characterised in that** the box (11) for the camera unit (8) is arranged in the housing (1) and is attached to said housing.

5. Device according to claim 3 or claim 4 **characterised in that** the box of the camera unit (8) is provided with a glass plate (12), behind which is arranged the camera lens.

6. Device according to one of claims 1 to 5 **characterised in that** a first cleaning device is housed in the housing for cleaning the channel wall through the access opening.

7. Device according to claim 6 **characterised in that** the first cleaning device possesses nozzles in order to feed pressurised water for cleaning the channel wall.

8. Device according to claim 6 or claim 7 **characterised in that** a second cleaning device with air and/or water nozzles is provided for cleaning and/or drying the glass plate of the camera unit (8).

9. Device according to one of claims 5 to 8 **characterised in that** the glass plate (12) possesses a water and dirt repellent coating.

10. Device according to one of claims 1 to 9 **characterised in that** the suction device possesses suction tubes (15) that are located in the area of the access opening (13) and resiliently stored in guide ways (16).

11. Device according to one of claims 1 to 10 **characterised in that** the seal (7) is arranged in a sealing frame (6) that is attached to the housing (1).

12. Device according to claim 11 **characterised in that** the sealing frame (6) is curved so as to fit to the channel wall.

13. Device according to one of claims 1 to 12 **characterised in that** feed pipes for fresh water are provided which protrude into the hollow chamber of the housing (1) for the supply of fresh water.

14. Process for inspecting water-conducting, tubular channels, particularly drains, **characterised by** the following steps: positioning a housing (1) on the surface to be inspected, said housing enclosing a hollow chamber and having an access port (13), wherein the access port faces towards the surface to be inspected,
applying a positive pressure into the housing (1) in order to displace the ingressing water,
pressing the housing with the access opening (13) onto the surface to be inspected so as to achieve a water-tight closure,
aspirating residual water out of the housing and
taking photographs of the surface to be inspected.

15. Process according to claim 14 **characterised in that** the surface to be inspected is cleaned through the access opening with pressurised water.

16. Process according to claim 14 or 15 **characterised in that** in the case of the presence of slight leakages when the housing is pressed against the surface of the channel wall, the hollow chamber for taking photographs of the surface to be inspected is filled with fresh water.

17. Process according to claim 14 or 15 or 16 **characterised in that** the photographs are evaluated while the channel wall is being scanned or saved and evaluated later.

## Revendications

1. Dispositif destiné à l'inspection de conduites véhiculant de l'eau, en particulier de conduites d'eaux usées, déplaçable dans la conduite à l'aide d'un dispositif de déplacement et comportant une unité à caméra pour enregistrer des images de la paroi de la conduite,
**caractérisé par**
un boîtier (1) étanche à la pression, entourant une chambre creuse, avec une ouverture d'accès (13), à la manière d'une cloche à plongeur, un joint d'étanchéité (7) entourant le bord de l'ouverture d'accès (13) pour isoler hermétiquement la chambre creuse sur la paroi à inspecter de la conduite, une amenée d'air comprimé, s'achevant dans le boîtier, pour expulser de l'eau lors du positionnement, sur la paroi de la conduite du boîtier (1) étanche à la pression, un dispositif d'aspiration (15) pour aspirer l'eau restante hors de la chambre creuse, après le positionnement du boîtier, l'unité à caméra, pour enregistrer des images de la paroi de la conduite, étant disposée de manière étanche à l'eau dans le boîtier.

2. Dispositif selon la revendication 1, **caractérisé en ce que** le bord de l'ouverture d'accès (13) est incurvé pour s'adapter à une paroi de conduite munie d'une courbure.

3. Dispositif selon la revendication 1 ou la revendication 2, **caractérisé en ce que** l'unité à caméra (8) comprend une caméra (9) et un dispositif d'éclairage (10), logés dans un caisson (11) étanche à l'eau.

4. Dispositif selon la revendication 3, **caractérisé en ce que** le caisson (11) de l'unité à caméra (8) est disposé dans le boîtier (1) et fixé à celui-ci.

5. Dispositif selon la revendication 3 ou la revendication 4, **caractérisé en ce que** le caisson (11) de l'unité à caméra (8) est muni d'un panneau en verre (12), derrière lequel est disposé l'objectif de la caméra.

6. Dispositif selon l'une des revendications 1 à 5, **caractérisé en ce qu'**un premier dispositif de nettoyage, pour nettoyer la paroi de la conduite en passant par l'ouverture d'accès, est disposé dans le boîtier.

7. Dispositif selon la revendication 6, **caractérisé en ce que** le premier dispositif de nettoyage comporte des buses, pour amener de l'eau placée sous pression, pour le nettoyage de la paroi de la conduite.

8. Dispositif selon la revendication 6 ou la revendication 7, **caractérisé en ce qu'**est prévu un deuxième dispositif de nettoyage, équipé de buses à air et/ou à eau, pour le nettoyage et/ou le séchage du panneau en verre de l'unité à caméra (8).

9. Dispositif selon l'une des revendications 5 à 8, **caractérisé en ce que** le panneau en verre (12) présente un revêtement hydrophobe et repoussant les salissures.

10. Dispositif selon l'une des revendications 1 à 9, **caractérisé en ce que** le dispositif d'aspiration présente des tubes d'aspiration (15), disposés dans la zone de l'ouverture d'accès (13) et montés élastiquement dans des guidages (16).

11. Dispositif selon l'une des revendications 1 à 10, **caractérisé en ce que** le joint d'étanchéité (7) est disposé dans un cadre pour joint d'étanchéité (6) fixé sur le boîtier (1).

12. Dispositif selon la revendication 11, **caractérisé en ce que** le cadre pour joint d'étanchéité (6) est incurvé, pour s'adapter à la paroi de la conduite.

13. Dispositif selon l'une des revendications 1 à 12, **caractérisé en ce que** sont prévus des tubes d'amenée d'eau douce, pénétrant dans la chambre creuse du boîtier (1), pour assurer l'alimentation en eau neuve.

14. Procédé d'inspection des conduites véhiculant de l'eau, en particulier de conduites d'eaux usées, **caractérisé par** les étapes suivantes :
positionnement d'un boîtier (1) entourant une chambre creuse, équipé d'une ouverture d'accès (13), sur la surface à inspecter, l'ouverture d'accès étant tournée vers la surface à inspecter,
application d'une surpression dans le boîtier (1), afin de refouler l'eau qui pénètre,
pressage du boîtier équipé de l'ouverture d'accès (13) sur la surface à inspecter, de manière à obtenir une fermeture étanche à l'eau,
aspiration de l'eau restante hors du boîtier et enregistrement d'images de la surface à inspecter.

15. Procédé selon la revendication 14, **caractérisé en ce que** la surface à inspecter est nettoyée avec de l'eau placée sous pression, en passant par l'ouverture d'accès.

16. Procédé selon la revendication 14 ou 15, **caractérisé en ce que**, pour l'enregistrement d'images de la surface à inspecter et en cas de présence de faibles inétanchéités, la chambre creuse est remplie d'eau douce lorsque le boîtier se trouve à l'état pressé sur la surface de la paroi de la conduite.

17. Procédé selon la revendication 14 ou 15 ou 16, **caractérisé en ce que** les images sont évaluées pendant l'exploration de la paroi de la conduite, ou mémorisées et évaluées ultérieurement.
